# EUROPEAN PATENT SPECIFICATION

(11) **EP 3 708 110 B1**
(45) Date of publication and mention of the grant of the patent: **26.04.2023**
(21) Application number: 20162993.8
(22) Date of filing: 13.03.2020
(51) Int. Cl.: A61C 3/03

(54) **MEDICAL DEVICE**
MEDIZINISCHE VORRICHTUNG
DISPOSITIF MÉDICAL

(30) Priority: 14.03.2019 DE 102019106563
(43) Date of publication of application: 16.09.2020
(73) Proprietor: Schillai, Gerhard, 96047 Bamberg (DE); Schillai, Kilian, 96049 Bamberg (DE)
(72) Inventor: Schillai, Gerhard, 96047 Bamberg (DE); Schillai, Kilian, 96049 Bamberg (DE)
(74) Representative: Zimmermann & Partner Patentanwälte mbB

(56) References cited:
- WO-A2-2008/103685
- CN-Y- 200 980 736
- KR-Y1- 200 436 674
- US-A- 3 624 908
- US-A1- 2010 279 252

## Description

### TECHNICAL FIELD

Embodiments described herein relate to medical devices.

### BACKGROUND

In orthodontics and dentistry in general teeth or fillings oftentimes are to be reduced (e.g. ground or polished) interproximally (i.e. between two neighbouring teeth). The reason could be a tooth size discrepancy, any morphologic anomaly or any dental material in need of some marginal trimming. In orthodontics this so called stripping procedure is often applied when some crowding of the teeth is to be corrected without having to extract teeth. With the existing techniques it is either impossible or very difficult and time consuming to reshape the tooth structure in the constricted area between teeth in an anatomically correct or therapeutically favourable manner. Especially when teeth are rotated the result could be similar to a slice cut with detrimental effects both to the hard and soft tissue.
KR 200 436674 Y1 relates to a nipper for protection of the gum.

In view of the above, there is a need for improvement.

### SUMMARY

The present invention is defined in the independent claim.

Prefered embodiments are the subject-matter of the dependent claims.

According to the claimed invention, a medical device for treating interdental surfaces is provided. The medical device includes: a treatment element with a first surface and a second surface, the first surface being opposite to the second surface; a drive assembly connected to the treatment element and configured to transfer a motion to the treatment element; an actuating assembly configured to exert a force on the first surface of the treatment element; and an abrasive coated on the second surface of the treatment element.

According to an embodiment, a medical system is provided. The medical system includes a medical device and a handpiece connected to the medical device and configured to drive the medical device. The medical device includes: a treatment element with a first surface and a second surface, the first surface being opposite to the second surface; a drive assembly connected to the treatment element and configured to transfer a motion to the treatment element; an actuating assembly configured to exert a force on the first surface of the treatment element; and an abrasive coated on the second surface of the treatment element.

Also disclosed but not claimed is a method for treating interdental surfaces. The method comprising the unordered steps: placing a medical device in proximity to a dental surface to be treated; moving a treatment element of the medical device; exerting a force on a first surface of the treatment element such that an abrasive coated on a second surface of the treatment element moves towards the dental surface to be treated.

Those skilled in the art will recognise additional features and advantages upon reading the following detailed description, and upon viewing the accompanying drawings.

### BRIEF DESCRIPTION OF THE DRAWINGS

The components in the figures are not necessarily to scale, instead emphasis being placed upon illustrating the principles of the disclosure. Moreover, in the figures, like reference signs designate corresponding parts. In the drawings:
- Fig.1: illustrates a treatment device according to an embodiment;
- Fig. 2: illustrates a treatment device according to an embodiment;
- Fig. 3: illustrates a treatment device according to an embodiment; and
- Fig. 4: illustrates a method for treatment according to an embodiment.

### DETAILED DESCRIPTION

In the following Detailed Description, reference is made to the accompanying drawings, which form a part hereof, and in which are shown by way of illustration specific embodiments in which the disclosure may be practiced. In this regard, directional terminology, such as "top", "bottom", "front", "back", "leading", "trailing", "lateral", "vertical" etc., is used with reference to the orientation of the Figure(s) being described. These terms are intended to encompass different orientations of the device in addition to different orientations than those depicted in the figures. Because components of embodiments can be positioned in a number of different orientations the directional terminology is used for purpose of illustration and is in no way limiting. Further, terms such as "first", "second", and the like, are also used to describe various elements, regions, sections, etc. and are also not intended to be limiting. Like terms refer to like elements throughout the description. It is to be understood that other embodiments may be utilised and structural or logical changes may be made without departing from the scope of the present invention.

The scope of the present invention is defined by the appended claims. The embodiments being described use specific language, which should not be construed as limiting the scope of the appended claims. References to "one embodiment," "an embodiment," "in certain embodiments," etc., indicate that the embodiment described may include a particular feature, structure, or characteristic, but other embodiments may not necessarily include the particular feature, structure, or characteristic. Accordingly, when a particular feature, structure, or characteristic is described in connection with an embodiment, other embodiments do not necessarily include the other features, structures, or characteristics of that embodiment. Moreover, such phrases are not necessarily referring to the same embodiment. Any features described as part of one embodiment described herein can be used on or in conjunction with other embodiments described herein to yield yet a further embodiment. It is intended that the description also includes such modifications, variations and combinations.

The present disclosure aims to adjust mechanically driven flexible grinding or polishing devices (also referred to as "treatment device" or "medical device" herein) to the structure to be ground or polished, such as a tooth or teeth. Thus, the present disclosure aims to insure the structure is ground or polished only where and when it is intended. A possible grinding or polishing medium (also referred to as "treatment element" herein) can be a disc or a strip, which can be abrasively coated only on one side, and/or which can be moved either in a rotating or in a reciprocating manner (moving back and forth). According to the present disclosure, an abrasive medium (also just referred to as "abrasive" herein) can be pushed (or pressed) from a non-abrasive side of the treatment device by a, e.g. peg shaped or ball-like, structure (also referred to as "actuator" herein; which can be made from metal or ceramic), which itself can be manipulated by an operator via a holding or activation grip or button (also referred to as "mover" herein). A further additional or optional feature could be a spring-back mechanism, against which this adjusting mechanism is activated, hence insuring that the pressure against the abrasive medium is (immediately) released once the operator ceases to exert pressure against the spring-back mechanism. The pressure on the abrasive medium can be exerted only when and as long as it is intended by the operator. Thus it may be possible to create the intended shape of the tooth structure and to increase the effectiveness of the grinding process.

For example, in the case of a rotating disc, it can be ensured that the assembly simultaneously serves as a guard protecting against injuries. In the exemplary case of a flexible band or abrasive strip, the abrasive strip may not be stretched tightly but can be somewhat loosely mounted to a jig in order to allow for the intended adaptation. Of course, the adjustment mechanism can be fixed to the non-moving parts.

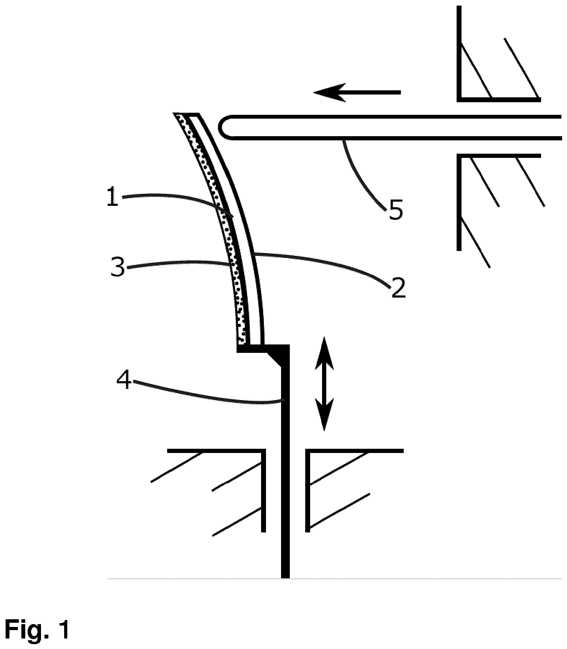

Embodiments described herein provide a medical device for treating interdental surfaces. Fig. 1 shows an exemplary medical treatment device according to embodiments described herein. The medical device can include a treatment element 1 with a first surface 2 and/or a second surface 3. The first surface 2 can be opposite to the second surface 3. The medical device can include a drive assembly 4. The drive assembly 4 can be connected to the treatment element 1. The drive assembly 4 can be configured to transfer a motion to the treatment element 2. The medical device can include an actuating assembly 5. The actuating assembly 5 can be configured to exert a force on the first surface 2 of the treatment element 1. The medical device can include an abrasive. The abrasive can be coated on the second surface 3 of the treatment element 1. When practicing embodiments it can be possible to create the intended shape of the tooth structure and to increase the effectiveness of the grinding process.

According to embodiments described herein, the actuating assembly 5 can be configured such that the force exerted on the first surface 2 of the treatment element 1 moves at least a portion of the treatment element towards a dental surface to be treated.

According to embodiments described herein, the treatment element 1 can be configured to undergo a deflection or flexible displacement, for example when pushed by an operator. The deflection or flexible displacement can be equal to or greater than 0.1 mm, specifically equal to or greater than 2 mm, particularly equal to or greater than 5 mm and/or of equal to or lower than 6 mm, specifically equal to or lower than 5 mm, particularly equal to or lower than 3 mm. In particular, the treatment element 1 can be configured to undergo a deflection or flexible displacement when the force is exerted on the first surface 2. The deflection or flexible displacement can have a main direction orthogonal to the second surface 3 and/or bring at least a portion of the second surface towards a dental surface to be treated.

According to embodiments described herein, the treatment element 1 can have a thickness of equal to or greater than 0.05 mm, specifically equal to or greater than 0.08 mm, particularly equal to or greater than 0.09 mm and/or of equal to or lower than 0.15 mm, specifically equal to or lower than 0.12 mm, particularly equal to or lower than 0.11 mm, and/or for example is 0.1 mm.

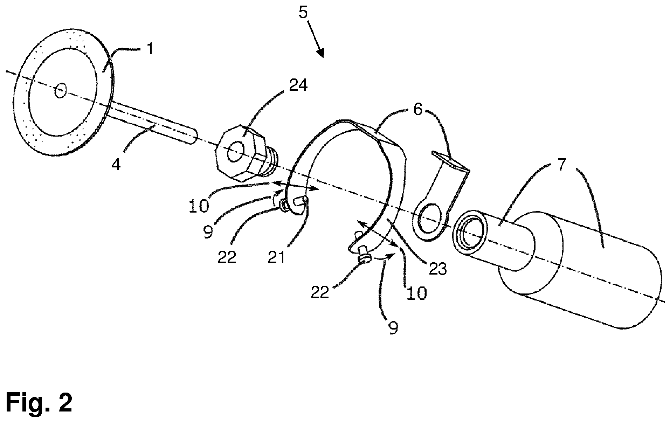

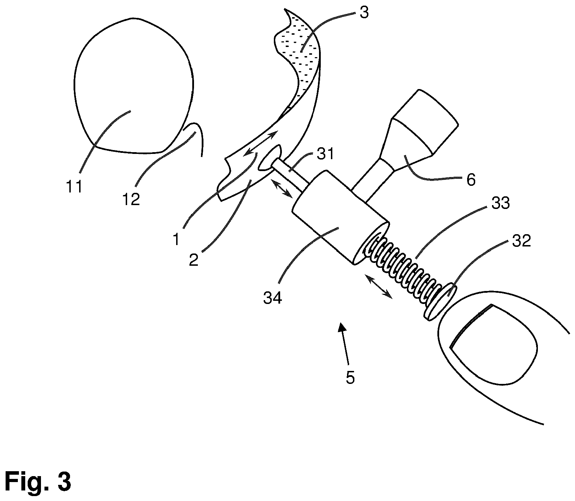

According to embodiments described herein, the actuating assembly 5 can include an actuator (see 21, 31 in Figs. 2 and 3) and/or a mover (see 22, 32 in Figs. 2 and 3). The actuator 21, 31 can be configured to contact the first surface 2 of the treatment element 1. The mover 22, 32 can be configured to be actuated by an operator. According to embodiments described herein, the actuator 21, 31 and the mover 22, 32 can be connected to each other. As outlined herein, the treatment element 1 can be a grinding or polishing device.

The actuator 21, 31 can be the structure actually exerting a pressure on the treatment element 1, such as flexible grinding or polishing device. The actuator 21, 31 can be made of some very hard material, such as metal (e.g. steel) or ceramic. The actuator 21, 31 can be fixed to the mover 22, 32, e.g. by welding, soldering, screwing or pressure fixation. The mover 22, 32 can be the structure allowing the operator to initiate the intended grinding or polishing process.

According to embodiments described herein, the actuating assembly can include a spring-back mechanism or return element (see 23, 33 in Figs. 2 and 3). The return element 23, 33 can be configured to return the actuating assembly 5 from a position in which the actuating assembly 5 exerts force on the first surface 2 of the treatment element 1. For example, the return element 23, 33 can include a blade spring, a coil spring or any other spring suspension.

According to embodiments described herein, a fixation assembly 6 can be provided. The fixation assembly 6 can be configured for fixing the actuating assembly 5 with respect to the treatment element 1.

In the exemplary case of the treatment element 1 being and/or including a rotating disc, the rotating disc can be for grinding or polishing and/or differ in thickness, diameter, flexibility and coarseness depending on the intended use. The disc can be coated by the abrasive material double sidedly or on a single side only, fully or partly, or any combination thereof. Beneficial for the present disclosure can be flexible discs, coated only partly (at the outer part of the disc) and on one side only.

According to embodiments described herein, the medical device can be connected to a handpiece (see 7 in Figs. 2 and 3), thus providing a system. The handpiece 7 can be configured to drive the medical device. In case of a rotational medical device, the handpiece 7 can be a straight handpiece or a contra angle handpiece, which both are commercially available. A reciprocating medical device can be driven by an eccentric mechanism or an ultrasonic driver, both of which already are employed in dentistry (EVA contra angle hand-piece for example).

While rotating discs are very effective for grinding teeth interproximally, as yet their employment has been associated with the difficulty to generate an anatomically correct or therapeutically optimal final result and to avoid a so-called slice-cut tooth shape. The present disclosure may allow in practice to adapt a very thin and flexible disc, which is coated with an abrasive only on one side, while it is rotating. The idea is to push the disc from the non-coated side in the direction of the surface to be ground or polished and thus to abrade the tooth structure only where and when it is desired. At the same time the abrasiveness can be increased by increasing the pressure. The embodiments containing a spring mechanism may make sure that the abrasiveness immediately ceases when the manually (by the operator) exerted pressure is relieved. The discs can be chosen thinner, and hence more flexible. The abrasive effect still will be higher, even with a lower frequency of rotation than in the past. Embodiments also can serve as a disc guard, simultaneously protective for both the patient and the operator.

Accordingly, rotating flexible discs may be the beneficial application. While they always have been considered as being very cost-efficient, convenient and effective, their main shortcoming, which is the difficulty to create the desired tooth shape, may be overcome by the present disclosure.

Mutatis mutandis a similar adjustment mechanism can be applied to an oscillating (reciprocating) grinding instrument, moving an abrasive strip in a jigsaw-like motion, which in this case can be flexible and abrasive on one side only.

An exemplary embodiment is described next with reference to Fig. 2. The exemplarily embodiment shown in Fig. 2 shows a rotating treatment element, such as a disc.

According to embodiments described herein, the treatment element 1 can have a disc-like shape. The drive assembly 4 can include a shaft or mandrel. The drive assembly 4 can be configured to transfer a rotational movement to the treatment element 1.

As shown in Fig. 2, the return element 23 can be a blade spring. The fixation assembly 6 can be configured as a guarding element for the disc, e.g. at least partially surrounding the disc. A fixation screw 24 can be provided for fixing the actuating assembly 5 with respect to the treatment element 1, in particular to the shaft. For example, the fixation screw 23 can be perforated, i.e. can include an inner lumen, through which the shaft can be provided. The handpiece 7 can be provided with a thread for receiving the fixation screw 23.

Arrow 9 may indicate the deflection of the blade spring 23 when inserting the mounted disc. Arrow 10 may indicate the deflection of the blade spring 23 when the actuator 21 is pressing on the first surface 2 of the flexible disc 1 (upper and lower respectively).

An exemplary embodiment is described next with reference to Fig. 3. The exemplarily embodiment shown in Fig. 3 shows a reciprocal driven medical device, such as a strip.

According to embodiments described herein, the treatment element 1 can include a flexible band or strip. The drive assembly 4 can be configured to transfer a reciprocal movement to the treatment element 1.

As shown in Fig. 3, the return element 33 can be a spring. The fixation assembly 6 can be configured as a guarding element for the disc, e.g. being arranged between the mover 32 and the treatment element 1. A guidance 34 can be provided for guiding the actuator 31 and/or the mover 32. Tooth 11 may provide the dental surface to be treated, e.g. ground or polished interproximally. A gum tissue 10 can be provided between the tooth 11 and the treatment element 11.

Instead of assembling different parts the whole device also could be formed from one piece (by cutting and bending for example) in order to attain the desired functionalities (i.e. actuator, mover and spring-back mechanism). According to embodiments described herein, the medical device, particularly the actuator 21, 31, the mover 22, 32, the return element 23, 33, and/or the guarding element 4, can be integrally formed, specifically laser cut from a single piece.

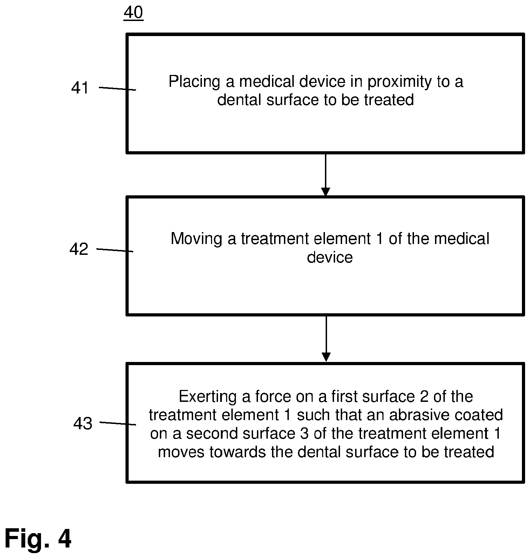

An exemplary embodiment is described next with reference to Fig. 4. The exemplarily embodiment shown in Fig. 4 shows a method for treating interdental surfaces.

According to embodiments described herein, a method 40 for treating interdental surfaces is provided. According to block 41, a medical device is placed in proximity to a dental surface to be treated. According to block 42, a treatment element 1 of the medical device is moved. In particular, the treatment element 1 can be put into motion before and/or after placing the medical device in proximity to a dental surface to be treated. According to block 43, a force is exerted on a first surface 2 of the treatment element 1 such that an abrasive coated on a second surface 3 of the treatment element 1 moves towards, in particular comes into contact with, the dental surface to be treated.

Especially with the increasing popularity of aligner treatments and non-extraction therapy in orthodontics there is an increasing demand for a fast, safe and effective way for applying the so-called stripping procedure. Several devices exhibiting shortcomings are on the market and widely sold, demonstrating the industrial application of the present disclosure. But also in conservative dentistry there is some potential for the present disclosure when it comes to grinding teeth interproximally and removing irritating edges of insufficient fillings for example.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present application is not limited by the foregoing description, nor is it limited by the accompanying drawings. Instead, the claimed scope is limited only by the following claims and their legal equivalents.

## Claims

1. A medical device for treating interdental surfaces, comprising:
a treatment element (1) with a first surface (2) and a second surface (3), the first surface (2) being opposite to the second surface (4);
a drive assembly (4) connected to the treatment element (1) and configured to transfer a motion to the treatment element (1);
an actuating assembly (5) configured to exert a force on the first surface (2) of the treatment element (1); and
an abrasive coated on the second surface (3) of the treatment element (1), wherein the actuating assembly (5) includes an actuator (21, 31) configured to
contact the first surface (2) of the treatment element (2) to exert the force on the first surface (2) of the treatment element (1) such as to deflect the treatment element (1I into a main direction orthogonal to the second surface (3),
**characterized in that**
the actuating assembly (5) includes a return element (23, 33) configured to return the actuating assembly (5) from a position in which the actuator exerts force on the first surface (2) of the treatment element (1).

2. The medical device of claim 1, wherein the abrasive is coated on a radially outer surface of the second surface (3) of the treatment element (1).

3. The medical device of claim 1 or 2, wherein the actuating assembly (5) is configured such that the force exerted on the first surface (2) of the treatment element (1) moves at least a portion of the treatment element towards a dental surface to be treated.

4. The medical device of any one of the preceding claims, wherein the actuating assembly (5) further includes a mover (22, 32) configured to be actuated by an operator.

5. The medical device of claim 4, wherein the actuator (21, 31) and the mover (22, 32) are connected to each other.

6. The medical device of any one of the preceding claims, wherein the treatment element (1) includes a flexible band, and the drive assembly (4) is configured to transfer a reciprocal movement to the treatment element (1).

7. The medical device of any one of the preceding claims, wherein the treatment element (1) is configured to undergo a deflection or flexible displacement of equal to or greater than 0.1 mm, specifically equal to or greater than 2 mm, particularly equal to or greater than 5 mm and/or of equal to or lower than 6 mm, specifically equal to or lower than 5 mm, particularly equal to or lower than 3 mm, for example when pushed by an operator.

8. The medical device of any one of the preceding claims, wherein the treatment element (1) has a thickness of equal to or greater than 0.05 mm, specifically equal to or greater than 0.08 mm, particularly equal to or greater than 0.09 mm and/or of equal to or lower than 0.15 mm, specifically equal to or lower than 0.12 mm, particularly equal to or lower than 0.11 mm, and/or for example is 0.10 mm.

9. The medical device of any one of the preceding claims, wherein the actuator (21, 31), the mover (22, 32), the return element (23), and the guarding element (4) are integrally formed, specifically laser cut from a single piece

10. A medical system comprising a medical device according to any one of the preceding claims and a handpiece (7) connected to the medical device and configured to drive the treatment element (1).

11. The medical system of claim 10, further comprising a fixation assembly (6) fixing the actuating assembly (5) with respect to the treatment element (1) via the handpiece (7).

12. The medical system of any of the preceding claims 10 and 11, wherein the treatment element (1) has a disc-like shape and the drive assembly (4) includes a shaft and is configured to transfer a rotational movement to the treatment element (1).

13. The medical system of any of claims 11 and 12, wherein the fixation assembly is configured as a guarding element for the disc-like shaped treatment element.

## Patentansprüche

1. Medizinische Vorrichtung zur Behandlung von interdentalen Oberflächen, umfassend:
ein Behandlungselement (1) mit einer ersten Oberfläche (2) und einer zweiten Oberfläche (3), wobei die erste Oberfläche (2) der zweiten Oberfläche (3) entgegengesetzt ist;
eine Antriebsbaugruppe (4), die an das Behandlungselement (1) angeschlossen und dazu ausgelegt ist, eine Bewegung auf das Behandlungselement (1) zu übertragen;
eine Betätigungsbaugruppe (5), die dazu ausgelegt ist, eine Kraft auf die erste Oberfläche (2) des Behandlungselements (1) auszuüben; und
ein Abrasionsmittel, das auf die zweite Oberfläche (3) des Behandlungselements (1) geschichtet ist,
wobei die Betätigungsbaugruppe (5) ein Betätigungsglied (21, 31) aufweist, das dazu ausgelegt ist, die erste Oberfläche (2) des Behandlungselements (1) zu kontaktieren, um die Kraft auf die erste Oberfläche (2) des Behandlungselements (1) so auszuüben, dass das Behandlungselement (1) in eine Hauptrichtung orthogonal zur zweiten Oberfläche (3) abgelenkt wird,
**dadurch gekennzeichnet, dass**
die Betätigungsbaugruppe (5) ein Rückführungselement (23, 33) aufweist, das dazu ausgelegt ist, die Betätigungsbaugruppe (5) aus einer Position zurückzuführen, in welcher das Betätigungsglied eine Kraft auf die erste Oberfläche (2) des Behandlungselements (1) ausübt.

2. Medizinische Vorrichtung nach Anspruch 1, wobei das Abrasionsmittel auf eine radial äußere Oberfläche der zweiten Oberfläche (3) des Behandlungselements (1) geschichtet ist.

3. Medizinische Vorrichtung nach Anspruch 1 oder 2, wobei die Betätigungsbaugruppe (5) so ausgelegt ist, dass die auf die erste Oberfläche (2) des Behandlungselementes (1) ausgeübte Kraft zumindest einen Teil des Behandlungselements zu einer zu behandelnden dentalen Oberfläche bewegt.

4. Medizinische Vorrichtung nach einem der vorhergehenden Ansprüche, wobei die Betätigungsbaugruppe (5) darüber hinaus ein Bewegungsglied (22, 32) aufweist, das dazu ausgelegt ist, durch eine Bedienperson betätigt zu werden.

5. Medizinische Vorrichtung nach Anspruch 4, wobei das Betätigungsglied (21, 31) und das Bewegungsglied (22, 32) miteinander verbunden sind.

6. Medizinische Vorrichtung nach einem der vorhergehenden Ansprüche, wobei das Behandlungselement (1) ein flexibles Band aufweist und die Antriebsbaugruppe (4) dazu ausgelegt ist, eine wechselseitige Bewegung auf das Behandlungselement (1) zu übertragen.

7. Medizinische Vorrichtung nach einem der vorhergehenden Ansprüche, wobei das Behandlungselement (1) dazu ausgelegt ist, eine Ablenkung oder flexible Verlagerung von gleich bis oder größer als 0,1 mm, speziell gleich bis oder größer als 2 mm, insbesondere gleich bis oder größer als 5 mm und/oder gleich bis oder weniger als 6 mm, speziell gleich bis oder weniger als 5 mm, insbesondere gleich bis oder weniger als 3 mm durchzumachen, wenn es zum Beispiel durch eine Bedienperson gedrückt wird.

8. Medizinische Vorrichtung nach einem der vorhergehenden Ansprüche, wobei das Behandlungselement (1) eine Dicke von gleich bis oder größer als 0,05 mm, speziell gleich bis oder größer als 0,08 mm, insbesondere gleich bis oder größer als 0,09 mm und/oder gleich bis oder weniger als 0,15 mm, insbesondere gleich bis oder weniger als 0,12 mm, insbesondere gleich bis oder weniger als 0,11 mm hat und/oder zum Beispiel 0,10 mm beträgt.

9. Medizinische Vorrichtung nach einem der vorhergehenden Ansprüche, wobei das Betätigungsglied (21, 31), das Bewegungsglied (22, 32), das Rückführungselement (23) und ein Schutzelement (44) integral ausgebildet, speziell aus einem einzelnen Stück lasergeschnitten sind.

10. Medizinisches System, das eine medizinische Vorrichtung nach einem der vorhergehenden Ansprüche und ein Handstück (7) umfasst, das an die medizinische Vorrichtung angeschlossen und dazu ausgelegt ist, das Behandlungselement (1) anzutreiben.

11. Medizinisches System nach Anspruch 10, darüber hinaus eine Befestigungsbaugruppe (6) umfassend, welche die Betätigungsbaugruppe (5) im Hinblick auf das Behandlungselement (1) über das Handstück (7) befestigt.

12. Medizinisches System nach einem der vorhergehenden Ansprüche 10 und 11, wobei das Behandlungselement (1) eine scheibenartige Form hat und die Antriebsbaugruppe (4) eine Welle aufweist und dazu ausgelegt ist, eine Drehbewegung auf das Behandlungselement (1) zu übertragen.

13. Medizinisches System nach einem der Ansprüche 11 und 12, wobei die Befestigungsbaugruppe als Schutzelement für das scheibenartig geformte Behandlungselement ausgelegt ist.

## Revendications

1. Dispositif médical destiné à traiter des surfaces interdentaires, comprenant :
un élément de traitement (1) présentant une première surface (2) et une deuxième surface (3), la première surface (2) étant opposée à la deuxième surface (3) ;
un ensemble d'entraînement (4) connecté à l'élément de traitement (1) et configuré pour transférer un mouvement à l'élément de traitement (1) ;
un ensemble d'actionnement (5) configuré pour exercer une force sur la première surface (2) de l'élément de traitement (1) ; et
un abrasif revêtu sur la deuxième surface (3) de l'élément de traitement (1),
sachant que l'ensemble d'actionnement (5) inclut un actionneur (21, 31) configuré pour entrer en contact avec la première surface (2) de l'élément de traitement (1) pour exercer la force sur la première surface (2) de l'élément de traitement (1) de manière à dévier l'élément de traitement (1) vers une direction principale perpendiculaire à la deuxième surface (3),
**caractérisé en ce que**
l'ensemble d'actionnement (5) inclut un élément de rappel (23, 33) configuré pour rappeler l'ensemble d'actionnement (5) depuis une position dans laquelle l'actionneur exerce une force sur la première surface (2) de l'élément de traitement (1).

2. Le dispositif médical de la revendication 1, sachant que l'abrasif est revêtu sur une surface radialement extérieure de la deuxième surface (3) de l'élément de traitement (1).

3. Le dispositif médical de la revendication 1 ou 2, sachant que l'ensemble d'actionnement (5) est configuré de telle sorte que la force exercée sur la première surface (2) de l'élément de traitement (1) déplace au moins une partie de l'élément de traitement vers une surface dentaire à traiter.

4. Le dispositif médical de l'une quelconque des revendications précédentes, sachant que l'ensemble d'actionnement (5) inclut en outre un organe de déplacement (22, 32) configuré pour être actionné par un opérateur.

5. Le dispositif médical de la revendication 4, sachant que l'actionneur (21, 31) et l'organe de déplacement (22, 32) sont connectés l'un à l'autre.

6. Le dispositif médical de l'une quelconque des revendications précédentes, sachant que l'élément de traitement (1) inclut une bande flexible, et l'ensemble d'entraînement (4) est configuré pour transférer un mouvement de va-et-vient à l'élément de traitement (1).

7. Le dispositif médical de l'une quelconque des revendications précédentes, sachant que l'élément de traitement (1) est configuré pour subir une déviation ou un déplacement flexible égal ou supérieur à 0,1 mm, spécifiquement égal ou supérieur à 2 mm, en particulier égal ou supérieur à 5 mm et/ou égal ou inférieur à 6 mm, spécifiquement égal ou inférieur à 5 mm, en particulier égal ou inférieur à 3 mm, par exemple lorsqu'il est poussé par un opérateur.

8. Le dispositif médical de l'une quelconque des revendications précédentes, sachant que l'élément de traitement (1) a une épaisseur égale ou supérieure à 0,05 mm, spécifiquement égale ou supérieure à 0,08 mm, en particulier égale ou supérieure à 0,09 mm et/ou égale ou inférieure à 0,15 mm, spécifiquement égale ou inférieure à 0,12 mm, en particulier égale ou inférieure à 0,11 mm, et/ou par exemple de 0,10 mm.

9. Le dispositif médical de l'une quelconque des revendications précédentes, sachant que l'actionneur (21, 31), l'organe de déplacement (22, 32), l'élément de rappel (23), et un élément de garde (4) sont formés d'un seul bloc, spécifiquement découpés par laser à partir d'une seule pièce.

10. Système médical comprenant un dispositif médical selon l'une quelconque des revendications précédentes et une pièce à main (7) connectée au dispositif médical et configurée pour entraîner l'élément de traitement (1).

11. Le système médical de la revendication 10, comprenant en outre un ensemble de fixation (6) fixant l'ensemble d'actionnement (5) par rapport à l'élément de traitement (1) via la pièce à main (7).

12. Le système médical de l'une quelconque des revendications précédentes 10 et 11, sachant que l'élément de traitement (1) a une forme de disque et l'ensemble d'entraînement (4) inclut un arbre et est configuré pour transférer un mouvement de rotation à l'élément de traitement (1).

13. Le système médical de l'une quelconque des revendications 11 et 12, sachant que l'ensemble de fixation est configuré comme élément de garde pour l'élément de traitement en forme de disque.
